Europäisches Patentamt

European Patent Office

Office européen des brevets

(11) Publication number: **0 187 546 B1**

# EUROPEAN PATENT SPECIFICATION

(45) Date of publication of patent specification: **29.05.91**    (51) Int. Cl.⁵: **G11B 17/03, G11B 17/028, G11B 19/20, G11B 3/60**

(21) Application number: **85309555.2**

(22) Date of filing: **31.12.85**

(54) Recording and/or reproducing apparatus for flexible magnetic discs.

(30) Priority: **31.12.84 JP 280119/84**
**19.01.85 JP 5717/85**

(43) Date of publication of application:
**16.07.86 Bulletin 86/29**

(45) Publication of the grant of the patent:
**29.05.91 Bulletin 91/22**

(84) Designated Contracting States:
**AT DE FR GB NL**

(56) References cited:
**FR-A- 2 535 099**
**US-A- 4 079 274**

(73) Proprietor: **SONY CORPORATION**
**7-35 Kitashinagawa 6-Chome Shinagawa-ku Tokyo 141(JP)**

(72) Inventor: **Kamoto, Hidetoshi c/o Patents Division**
**Sony Corporation 6-7-35 Kitashinagawa Shinagawa-ku Tokyo 141(JP)**
Inventor: **Yamanouchi, Hiroshi c/o Patents Division**
**Sony Corporation 6-7-35 Kitashinagawa**
**Shinagawa-ku Tokyo 141(JP)**
Inventor: **Takahashi, Shogo c/o Patents Division**
**Sony Corporation 6-7-35 Kitashinagawa**
**Shinagawa-ku Tokyo 141(JP)**
Inventor: **Takamiya, Toru c/o Patents Division**
**Sony Corporation 6-7-35 Kitashinagawa**
**Shinagawa-ku Tokyo 141(JP)**
Inventor: **Gouda, Yoshimasa c/o Patents Division**
**Sony Corporation 6-7-35 Kitashinagawa**
**Shinagawa-ku Tokyo 141(JP)**

(74) Representative: **Purvis, William Michael Cameron et al**
**D. Young & Co. 10 Staple Inn**
**London WC1V 7RD(GB)**

Rank Xerox (UK) Business Services

## Description

The invention relates to recording and/or reproducing apparatus for a magnetic disc such as a floppy disc for recording and/or reproducing information signals onto or from a magnetic disc enclosed in a disc cassette.

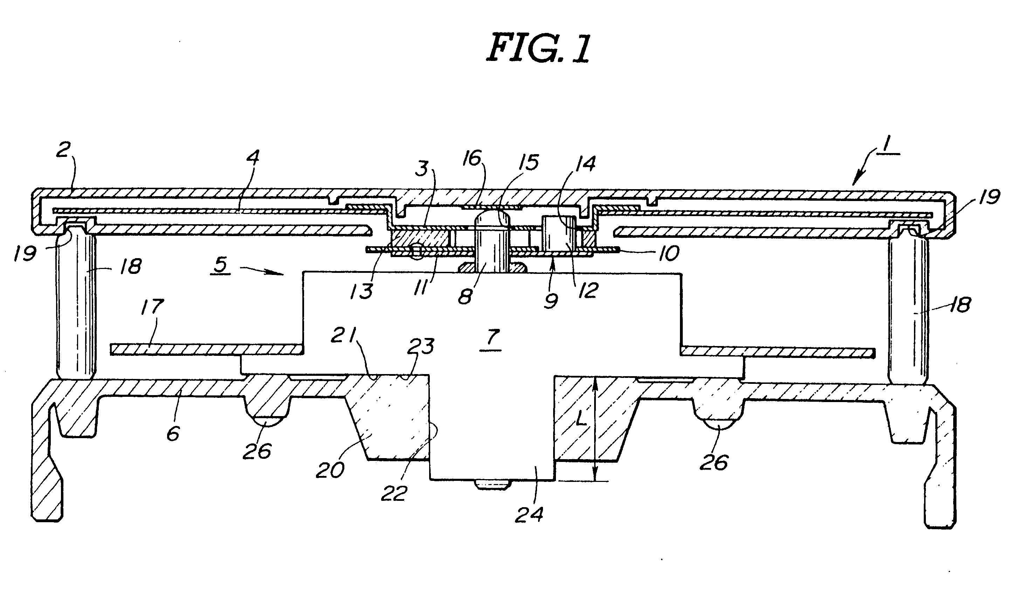

United States Patent No. US-A-4,445,155 shows a mounting structure for a disc driving electric motor for a recording and/or reproducing apparatus for a micro floppy disc as shown in Figure 1 of the accompanying drawings. A micro floppy disc 1 comprises a disc 4 having a centre core 3 disposed centrally of a cassette 2. In a driving device 5, which mounts the micro floppy disc 1, a chassis 6 and a motor unit 7 on the chassis 6 are provided and a chucking part 9, for engaging with the centre core 3, is provided at the upper part of a spindle 8 which is the output shaft of the motor. The chucking part 9 comprises a driving pin 12 for positioning and driving the centre core 3 and is provided on a turntable 10 with a lever 11 and a magnet 13 for attracting the centre core 3. The centre core 3 is provided with a driving pin insertion opening 14 for receiving the driving pin 12 and a centre opening 15 for receiving the spindle 8 so that it can be driven in engagement with the chucking part 9. A sheet 16 is affixed to the portion of the cassette 2 abutted by the end of the spindle 8. The motor unit 7 is provided with a circuit board 17 for driving and controlling the motor. The chassis 6 has positioning pins 18 the end parts of which are engaged within positioning apertures 19 in the lower surface of the cassette 2 for positioning the cassette 2 relative to the chassis 6. The chassis 6 includes a motor unit positioning member 20 having a motor height regulating surface 21 and a motor position regulating surface 22 for positioning the motor unit 7 by means of the inner surface of a cylindrical bore. The lower part of the motor unit 7 has a reference surface 23 which contacts the surface 21 and a cylindrical positioning portion 24 which engages the positioning surface 22. The motor unit 7 is secured to the chassis 6 by screws 26 after positioning the motor unit 7 with respect to the chassis 6. In prior art driving units the motor unit 7 is separate from and mounted on the chassis 6 so that it has not been possible to construct the driving device with a mounting height smaller than the sum of the mounting height of the motor unit 7 and that of the chassis 6. Also, since the motor unit 7 and the chassis 6 are separate units, it has been difficult to get the motor unit 7 accurately positioned with respect to the chassis 6. Thus, use of a special jig and skilled labour is required if the mounting is performed only by screws. Deviation in the mounting position may be caused by impact or vibration. The positioning system shown in Figure 1 was proposed to overcome such drawbacks. In the positioning system shown in Figure 1, however, mounting accuracy of the motor unit 7 on the chassis 6 is determined by the machining tolerance of the motor height regulating surface 21, the motor positioning surface 21, the reference surface 23 and the positioning portion 24. The mounting accuracy will be greater the greater the length L of the positioning portion 24. However, it is presently not possible to adopt a longer length L because of the demand for cost and size reduction of the driving unit. Thus it has become necessary to provide a motor mounting structure which has an overall combined height of the motor unit 7 and the chassis 6 as small as possible and which also lends itself to reduction of manufacturing costs.

Patent Specification FR-A-2 535 099 discloses disc recording and/or reproducing apparatus including a spindle rotatable in a chassis, a spindle, chucking means for engaging a disc for rotation with the spindle, a rotor magnet for rotating the spindle, a base board fixed to the chassis and a stator coil mounted on the base board and located adjacent the rotor magnet. Positioning pins are provided on the chassis to position a disc cassette.

According to the invention there is provided recording and/or reproducing apparatus for recording and/or reproducing information signals onto or from a magnetic disc enclosed in a disc cassette, the apparatus comprising

a chassis;

a recording and/or reproducing head movably attached to the chassis;

a cassette holder mounted on the chassis so as to be movable between a cassette inserting position and a cassette operating position; and

means for rotating the disc when the cassette holder is in the cassette operating position; said means comprising:-

a spindle rotatably mounted in the chassis by bearing means;

chucking means provided on the upper side of the spindle to couple the disc with the spindle;

a rotor magnet fixed to the spindle, disposed beneath the chassis and to be rotated to rotate the spindle;

a circuit base board fixed to the chassis and disposed beneath the rotor magnet; and

a stator coil mounted on the circuit base board and juxtaposed with the rotor magnet;

characterised by

a supporting plate of magnetizable material affixed to the chassis beneath the rotor magnet and supporting the circuit base board, the magnetic force between the rotor magnet and the supporting plate being exerted on the spindle downwardly to suppress vertical wobbling of bearing means with respect to the chassis.

In such recording and/or reproducing apparatus the combined height of the chassis and the electrical motor designated as part of the chassis can be reduced to a small value to reduce the overall size of the device.

Part of the chassis is included as motor component and the electric motor is designed by making use of the chassis so that the chassis may be used as a high precision mounting reference for achieving improved mounting accuracy of the electric motor.

The electric motor may be mounted highly accurately with respect to the chassis for improving accuracy in the relative disposition between the floppy disc driven in rotation by the electric motor and the head which is mounted by the chassis and which writes or reads information signals into or from the disc to provide for accurate writing and read-out of the information signals.

Preferably the apparatus includes positioning pins penetrating the chassis;

cassette positioning portions provided on the top of the positioning pins to position the disc cassette when the cassette holder is in the cassette operating position; and

circuit base board positioning portions provided beneath the positioning pins to position the circuit base board so as to face the rotor magnet and the stator coil.

Advantageously the bearing means are press-fitted into the chassis.

The invention is diagrammatically illustrated by way of example with reference to the accompanying drawings in which:

Figure 1 is a sectional side elevation of previously proposed recording and/or reproducing apparatus;

Figure 2 is a perspective view of a flexible magnetic disc cassette for use in recording and/or reproducing apparatus according to the invention;

Figure 3 is a bottom view of the cassette of Figure 2;

Figure 4 is an exploded perspective view showing components of recording and/or reproducing apparatus according to one embodiment of the invention;

Figure 5 is a plan view of the apparatus of Figure 5 showing the recording and/or reproducing apparatus in the eject state, that is, with the flexible magnetic disc cassette removed;

Figure 6 is a side elevation of the apparatus of Figure 5;

Figure 7 is a sectional view through recording and/or reproducing apparatus according to the invention showing an electric motor with magnetic disc chucking means and a chassis portion in which the motor is incorporated;

Figure 8 is a bottom view corresponding to Figure 7 showing mounting of a stator coil of the motor incorporated into the chassis and of a printed circuit board with a stator coil thereon;

Figure 9 is a perspective view of an ejection unit of the apparatus of Figure 4 operable to shift a loading plate;

Figure 10 is a plan view showing the relation between the loading plate and an offset driving pin of the ejection unit in the loading state;

Figure 11 is a plan view similar to Figure 5 but showing the disc cassette loaded position of the recording and/or reproducing device; and

Figure 13 is a plan view showing the relation between the loading plate and the offset driving pin in the ejection state.

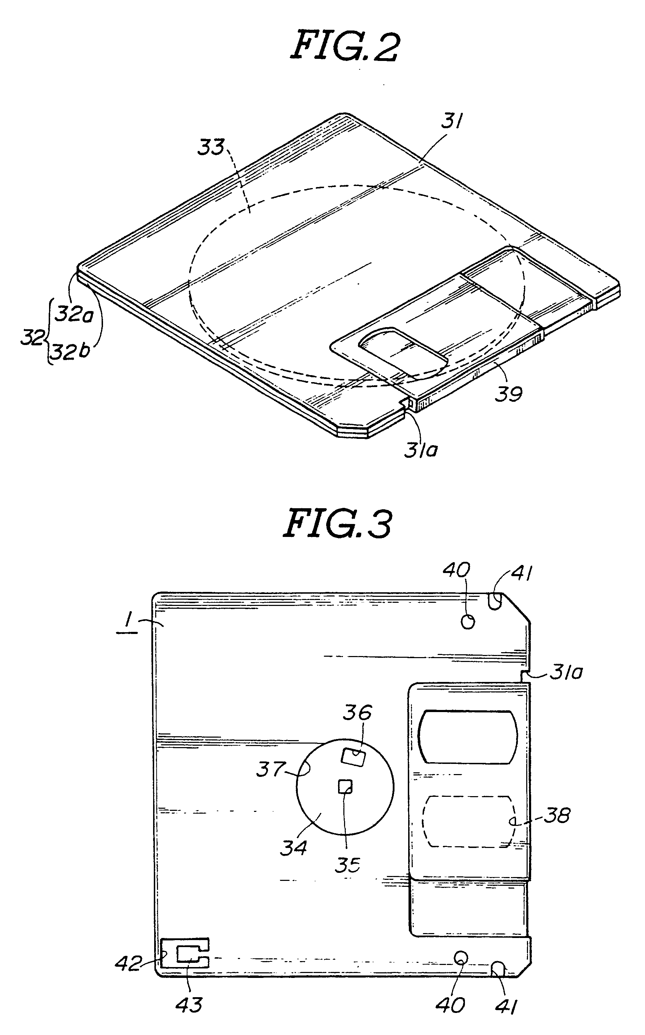

Recording and/or reproducing apparatus mounts a flexible magnetic disc cassette 31 which, as shown in Figures 2 and 3, accommodates a sheet-like resilient magnetic disc 33 for free rotation within the interior of a cassette housing 32 comprising an upper half 32a and a lower half 32b. A centre core 34 formed as a metallic plate 34 is secured centrally of the disc 33 and has a centre aperture 35 and a driving pin insertion opening 36 at a position offset from the centre, respectively. The centre aperture 35 is square and the driving pin insertion opening 36 is rectangular in configuration. The centre core 34 is loosely fitted within a chuck unit insertion opening 37 at the centre of the lower half 32b. The upper and lower halves 32a,32b are provided with a head receiving aperture 38 radially of the disc 33, which aperture 38 can be opened or closed by a shutter 39. Positioning pin receiving apertures 40,40 are formed at side positions at opposite sides of the head receiving aperture 38 in the lower half 32b, and recesses 41 are provided adjacent thereto. At one rear corner of the lower half of the cassette half 32b there is provided an inadvertent erasure inhibit opening 42 and a removable inadvertent erasure inhibit sensor 43 which can cover the inhibit opening 42.

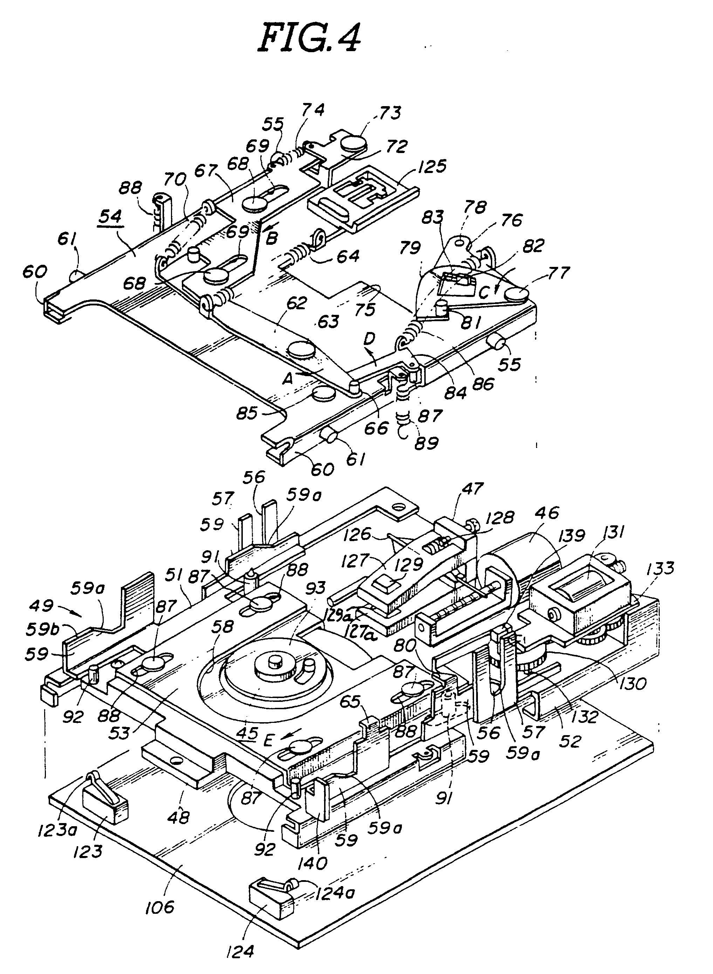

Referring to Figures 4 to 13, recording and/or reproducing apparatus in which the disc cassette 31 can be engaged comprises a disc mounting and dismounting unit 49 incorporated into a chassis 48 on which are mounted a driving unit 45 for rotationally driving the magnetic disc 33 contained in the cassette 31 and a head unit 47 to be shifted between the inner and outer peripheries of the disc 33 by a stepping motor 46 as the disc is chucked within the unit 45 to write or read-out information signals on or from the disc 33.

The disc mounting and dismounting unit 49 to insert or remove the disc cassette 31 into or from the recording and/or reproducing apparatus comprises a pair of side plate sections 51,52 arranged parallel and opposite to each other at the sides of the chassis 48, a loading plate section 53 slidably mounted on the chassis 48 between the sections 51,52, and a cassette holder 54 mounted on the section 53 and providing a space or gap sufficient to allow for insertion of the disc cassette 31.

On the inner sides of the side plate sections 51,52 are engaged a pair of guide rolls 55,55 mounted on both rear sides of the cassette holder 54, while a pair of guide sections 59,57 are provided with vertical positioning guide slots 56,56 for vertically positioning and slidingly guiding the cassette holder 54 with respect to the chassis 48.

The chassis 48 is provided with four slide guide pins 87 introduced through elongate apertures 88 in the loading plate section 53 so that the plate section 53 is slidable on the chassis 48 to the extent of the apertures 88.

Centrally of the loading plate section 53 is formed a U-shaped reentrant recess 58 opening towards the rear and into which the driving unit 45 is introduced, while at the opposite side edges of the loading plate section 53 are formed two pairs of upright cam plate sections 59 each having an inclined camming surface 59a. The cam plate sections 59 are operable to support the cassette holder 54 is an elevated position after ejection and before insertion of a disc cassette 31 and to allow the cassette holder 54 to move to a lowered position to move a disc cassette in an operating position.

The sides of the cassette holder 54 are bent to form U-shaped cassette holding sections 60 to guide and hold the disc cassette 31. The sides of the cassette holder 54 are provided with a second pair of guide rollers 61 forwardly of the guide rollers 55. The cassette holder 54 is located over the loading plate section 53 with the guide rollers 55,61 resting on the cam plates 59 of the loading plate 53 and with the inner guide rollers 55 engaged with the positioning slots 56.

On the upper surface of the cassette holder 54 is mounted a cassette holder driving arm 62 extending widthwise of the cassette holder 54 and rotatable about a pivot 63. The driving arm 62 is urged to rotate in the direction of arrow A of Figure 4 by a first tension spring 64 installed between one end of the arm 62 and the cassette holder 54. The other end of the driving arm 62 is formed with a lock pin 66 for engaging with a first upright lock pawl 65 provided at one side of the loading plate 54. On the side of the cassette holder 54, corresponding to said one end of the driving arm 62, there is further mounted a loading lever 67 slidable in the inserting or extracting direction of the disc cassette 31. The loading lever 67 has elongate apertures 69,69 therein accommodating upright guide pins 68,68 on the cassette holder 54 so that the lever 67 is slidable to the extent of the apertures 69. The lever 67 is biased in the direction of arrow B of Figure 4 by a second tension spring 70 installed between the lever 67 and said one end of the driving arm 62.

To the rear side of the loading lever 67 a hook lever 72 is rotatably mounted by a pivot 73 and has a foremost hook pin 71 engageable with one of the recesses 41 in the disc cassette 31. The lever 72 is biased by an associated spring 74 extending between the lever 72 and the loading lever 67 so that the lever 72 is turned to project laterally outwardly of the cassette holder 54. The rotation of the hook lever 72 is limited by the mid portion of the hook lever 72 engaging with one side wall section of the cassette holder 54.

On one side of a U-shaped recess 75 centrally of the cassette holder 54 is rotatably mounted, by a supporting shaft 77, a shutter arm 76 which can actuate the shutter 39 of the disc cassette 31. To the foremost part of the shutter arm 76 is mounted a depending engaging pin 78 to engage in a recess 31a (Figures 2 and 3) formed on one side of the shutter 39 of the disc cassette 31. A locking arm 79 for locking the movement of the cassette holder 54 is mounted on the same pivot 77 as that of the shutter arm 76. The lock arm 79 has a lock pin 81 in the foremost part thereof for engaging with a second upright lock pawl 80 provided to one side of the loading plate 53. During the ejection state, the lock pin 81 engages with the second pawl 80 for locking the cassette holder 54. The lock arm 79 is mounted to the shutter arm 76 by having an upright engaging section 82 on the side opposite to the lock pin 81 engaged in a substantially square opening 83 in the shutter arm 76 so that the lock arm may be rotated in unison with the shutter arm 76. The cassette holder 54 also rotatably mounts, by a pivot 85, an arm 84 to inhibit reverse insertion of the disc cassette 31.

A fourth tension spring 86 is installed between the reverse insertion inhibit arm 84 and the shutter arm 76 so that the shutter arm 76 is biased to rotate in the direction of arrow C of Figure 4 while the reverse insertion inhibit arm 84 is biased to rotate inwardly of the cassette holder 54 as shown by arrow D of Figure 4. The reverse insertion inhibit arm 84 is provided with an engaging pin 87 engaging with an associated part of the cassette holder 54 for limiting rotation of the arm 84.

With the cassette holder driving arm 62, the loading lever 67, the hook lever 72 and the shutter arm 76 mounted in position and the guide rollers 55,61 resting on the associated cam plate sections 59 of the loading plate 53, the cassette holder 54 is biased in the direction of the chassis 48 by compression springs 88,89 installed between the cassette holder 54 and the side plate sections 51,52. In the ejection state or the insertion and removal enabling state of the disc cassette 31, the cassette holder 54 is mounted in an elevated position, with the guide rollers 55,61 resting on horizontal portions 59b on the upper surfaces of the loading plate 53. The driving arm 62 is urged to rotate in the direction opposite to arrow A of Figure 4 against the bias of the first tension spring 64 so that the locking pin 66 is engaged with the first lock pawl 65 of the loading plate 54 for shifting the loading plate 54 in the direction of arrow E of Figure 4 to hold the cassette holder 54 in the elevated position. With the cassette holder driving arm 62 urged to rotate in the direction opposite to arrow A of Figure 4, the loading lever 67 is shifted by the second tension spring 79 towards the foremost side of the cassette holder 54 where the cassette 31 is introduced into or removed from the cassette holder. The hook lever 72 provided to the rear side of the loading lever 67 is biased to rotate by the associated spring 74 so that the foremost hook pin 71 engages in the recess 41 in the side wall of the cassette holder 54 so as to be projected outwardly of the cassette holder 54. The shutter arm 76 is biased into rotation so that the pin 78 engages with one side of the recess 75 in the cassette holder 54 to cause rotation of the locking arm 79 in the direction of arrow C of Figure 4 for locking the pin 81 with the second pawl 80 formed on the loading plate 54.

In the chassis 48 are engaged a pair of positioning pins 91,91 the upper ends of which are received in the apertures 40,40 in the disc cassette 31 for positioning and supporting the disc cassette 31 mounted or dismounted by the unit 49, and a pair of abutment positioning pins 92,92 abutting on the plane surface of the disc cassette 31.

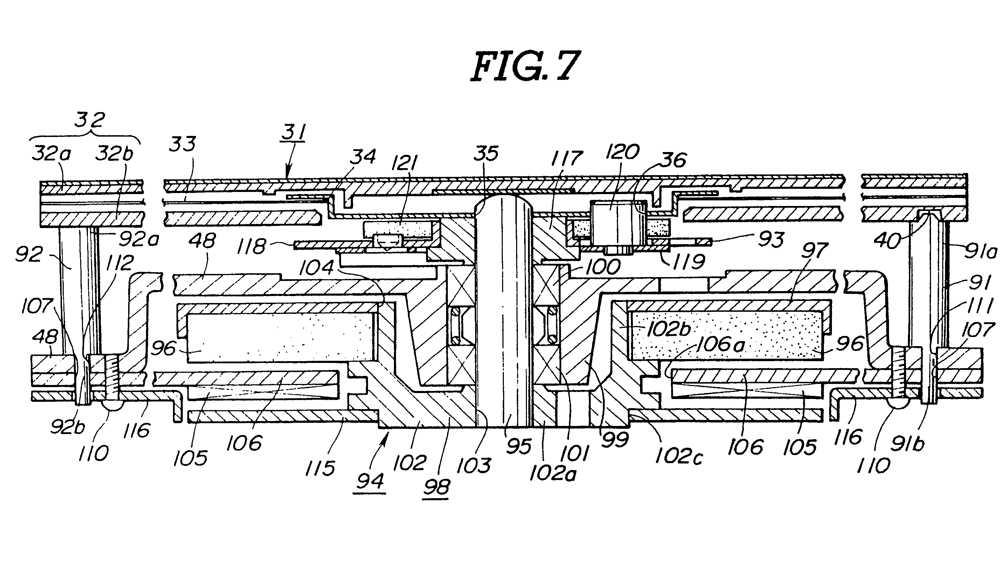

The rotational driving unit 45 built into the chassis 48 comprises a disc chucking unit 93 for positioning and securing the magnetic disc 33 accommodated in the disc cassette 31 and an electric motor 94 (Figure 7) for rotationally driving the disc chucking unit 93.

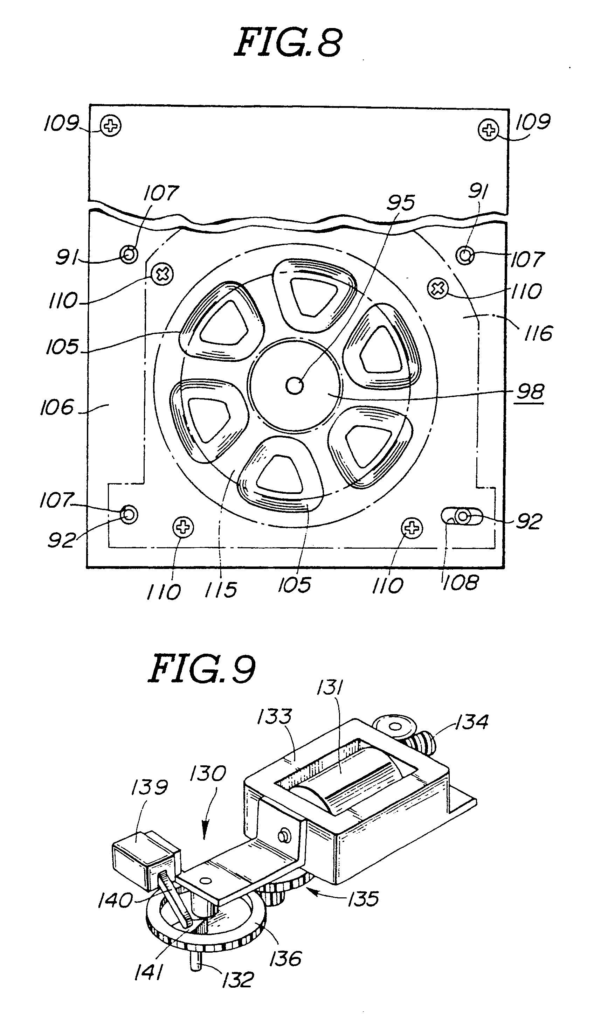

The motor 94 has a rotor block 98 which includes a rotor casing 97 and a rotor magnet 96, and a spindle 95, the rotor block 98 being directly supported on the chassis 48 on which is similarly mounted the head unit 47 which slidingly contacts the disc 33 for reading and/or writing information data, the disc being chucked in the unit 93. The chassis 48 is formed with high precision by, for example, aluminium die casting and a hollow, conical driving shaft receiving section 99 is formed on the underside of that section forming part of the electric motor 94. In the section 99 are provided a pair of bearings 100,101 for rotatably supporting the spindle 95 with respect to the chassis 48. The lower end of the spindle 95 projecting from section 99 securely mounts a magnet holder 102 by engagement of the spindle 95 within a centre aperture 103. To the magnet holder 102 is attached the rotor casing 97 carrying the annular rotor magnet 96. The magnet holder 102 has a spindle mounting portion 102a including the aperture 103 and an upright rotor casing attachment portion 102b extending from the periphery of the section 102a. The holder 102 is thus generally cup-shaped, is attached to the spindle 95 and receives the driving shaft receiving section 99. The rotor casing 97 is press-fitted at a central aperture 104 to the upper end of the rotor casing mounting portion 102b of the magnet holder 102. The rotor magnet 96 is affixed to the underside of the rotor casing 97. Opposite to the rotor magnet 96 are mounted a plurality of stator coils 105 affixed to one face of a base board 106 including a printed circuit board and attached to the underside of the chassis 48. The circuit board 106 is secured in position by screws 109,110 (Figures 7 and 8), with the lower ends of the pair of abutment positioning pins 92 and the pair of positioning pins 91,91, for supporting at a preset position and a preset level on the chassis 48 the cassette disc 31 mounted on the disc chucking unit 93, passing through holes 107 and 108. The magnet holder 102 extends through an aperture 106a in the centre of the stator coil 105 arrangement in an annular pattern on one face of the circuit board 106.

The positioning pins 91,91 are introduced through positioning apertures 111 in the chassis 48 to traverse the upper and lower sides of the chassis 48 so that the foremost parts of the pins 91,91 projecting above the upper side of the chassis are used as positioning portions 91a,91a engaging the associated apertures 40,40 in the disc cassette 31 while rear parts of the pins 91,91 project below the lower side of the chassis 48 and are used as positioning mounting parts 91b for the printed circuit board 106. The abutment positioning pins 92,92 are similarly introduced into mounting apertures 112 in the chassis so as to traverse the upper and lower sides of the chassis 48 so that the foremost parts of the pins 92 projecting above the upper surface of the chassis are used as abutment supporting portions 92a for supporting the plane surface of the disc cassette 31 while the rear parts of the pins 92 projecting to the lower side of the chassis are used as positioning mounting portions 92b for the printed circuit board 106.

In this manner, by being supported by the abutment positioning pins 92,92 and the positioning pins 91,91 mounted by the chassis 48, the circuit board 106 may be mounted on the chassis 48 with high positional accuracy.

It will be noted that, when the aperture passed by one of the abutment positioning pins 92 is elongate so as to be usable as a positioning control aperture 108, machining tolerance of the circuit board 106 is absorbed when the board is supported by the positioning pins 91,92, thus ensuring precision mounting of the circuit board.

An annular rotor yoke 115 is fitted by a reduced diameter yoke mounting section 102c to the rear end of the magnet holder 102. Beneath the circuit board 106 is mounted a supporting plate 116 of magnetizable material which is affixed to the chassis 48 together with the circuit board 106 by the screws 110. The supporting plate 116 surrounds the rotor yoke 115 which lies beneath the outwardly facing stator coil 105 mounted to one face, the lower surface as seen in Figure 7, of the printed circuit board 106, for providing magnetic shielding of leakage flux emanating from the stator coil 105. The supporting plate 116 and the rotor magnet 96 attract each other to bias the rotor block 98 inclusive of the spindle axially with respect to the chassis 48.

The above described electric motor 94 is designed as a unit with the chassis 48.

The foremost part of the spindle 95 of the motor 94 has the disc chucking unit 93 engaging with the centre core 34 of the magnetic disc 33. The chucking unit 93 comprises a driving pin 120 for positioning and driving the centre core 34 and a magnet 121 provided on a turntable 118 and designed to attract the centre core 34. The turntable 118 is mounted by a bearing member 117 secured to the end of the spindle 95. The centre core 34 is mounted to the turntable by the medium of a lever 119 mounted with a rotational bias afforded by a spring, not shown. The magnetic disc 33 having the centre core 34 is chucked by the chucking unit 93 so that the driving pin 120 is introduced into the driving pin receiving aperture 36, the spindle 95 is introduced into the centre aperture 35 and the centre core 34 is attracted by the magnet 121. Upon actuation of the motor 94, the disc 33 is driven in rotation together with the turntable 118.

Since the above described electric motor 94 is designed so that the rotor block 98 is directly supported by the chassis 48, a motor casing and like components which would otherwise be required for mounting the motor to the chassis 48 can be dispensed with and the motor 94 can be constructed integral with the chassis 48. Hence the overall combined mounting height of the motor 94 and the chassis 48 may be reduced.

In addition, mounting accuracy of the rotor block 98 on the chassis 48 represents that of the overall motor 94 on the chassis 48 with an improved mounting accuracy of the motor with respect to the chassis 48.

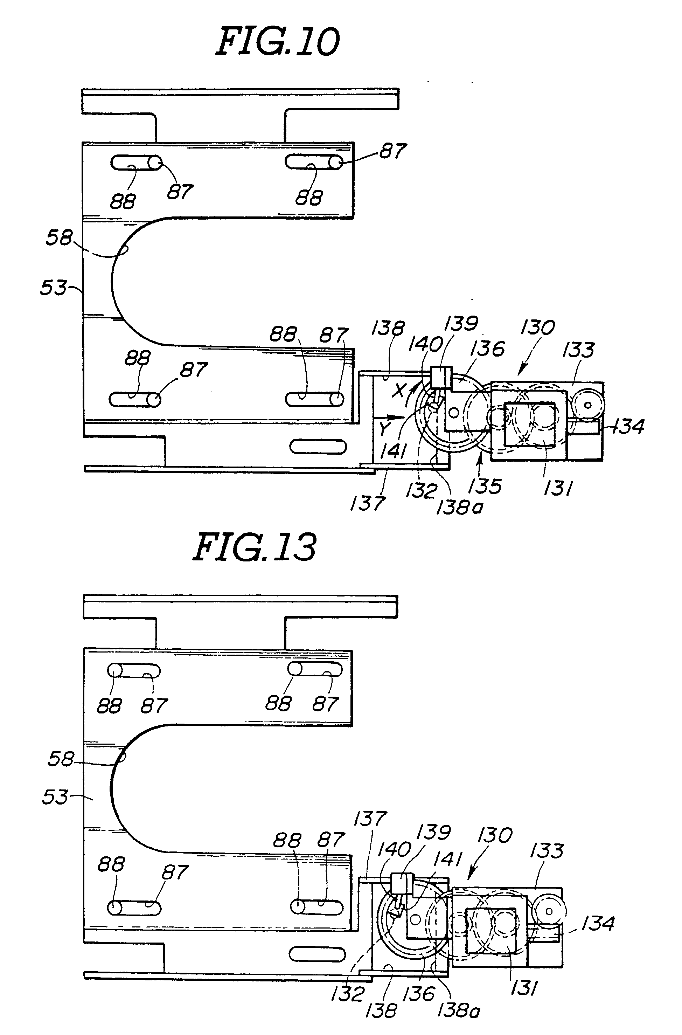

An ejection unit 130 (Figure 9) having an offset driving pin 132 driven in rotation by a loading electric motor 131 is mounted to one side plate section 52 of the chassis 48 for confronting one rear end of the loading plate 53. As shown in Figure 9, the ejection unit 130 comprises a driving motor 131 mounted on a base 133 mounted in turn on the side plate section 52, a speed reduction gearing 135 including plural gears connected to and driven by a worm gear 134 affixed to the output shaft of the motor 131, and the offset driving pin 132 on the underside of a spur gear 136 which is the last gear of the reduction gearing 135. In addition, the ejection unit 130 is so designed that the offset driving pin 132 projects into a square engaging recess 138 in a slide actuator 137 (Figure 10) projecting rearwardly of one end part of the loading plate 53.

A rotation sensor switch 139 is mounted on the base 133 for sensing stopping of the offset driving pin 132 at a predetermined position. The switch 139 operates to control the stop position of the pin 132 by an operating member 140 opposing the upper surface of the spur gear 136 at a position coresponding to that at which the offset driving pin 132 is located, the operating member being acted upon by a switch operating section 141 projecting from the spur gear 136. The section 141 is mounted at a position to act on the operating member 140 to commutate the switch 139 when the offset driving pin 132 has reached a predetermined position. In this manner, by virtue of the positional sensing by the sensor switch 139, the offset driving pin 132 is stopped so that it projects at a predetermined position with respect to the engaging recess 138 of the loading plate 53.

In the loading state in which the loading plate 53 has guided the cassette holder 54 to a disc cassette attachment position in which the holder 54 is lowered towards the chassis 48, the offset driving pin 132 is engaged with a rear side edge 138a of the recess 138 (Figure 9). Hence, when the offset driving pin 132 is driven in rotation in the direction of arrow X of Figure 10, the loading plate 53 is shifted in the direction of arrow Y in Figure 10 to elevate the cassette holder 54 away from the chassis to eject the disc cassette.

Since the recess 138 has a dimension larger than the sliding extent of the loading plate 53 at the time of disc cassette ejection, the loading plate 53 can be slid independently and without engaging with the offset driving pin 132.

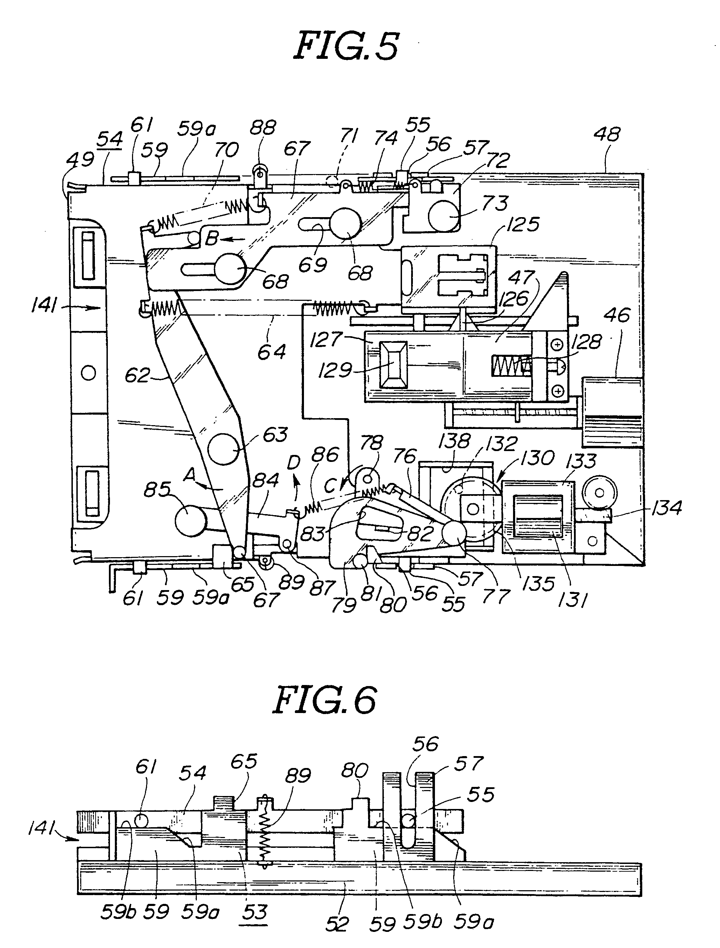

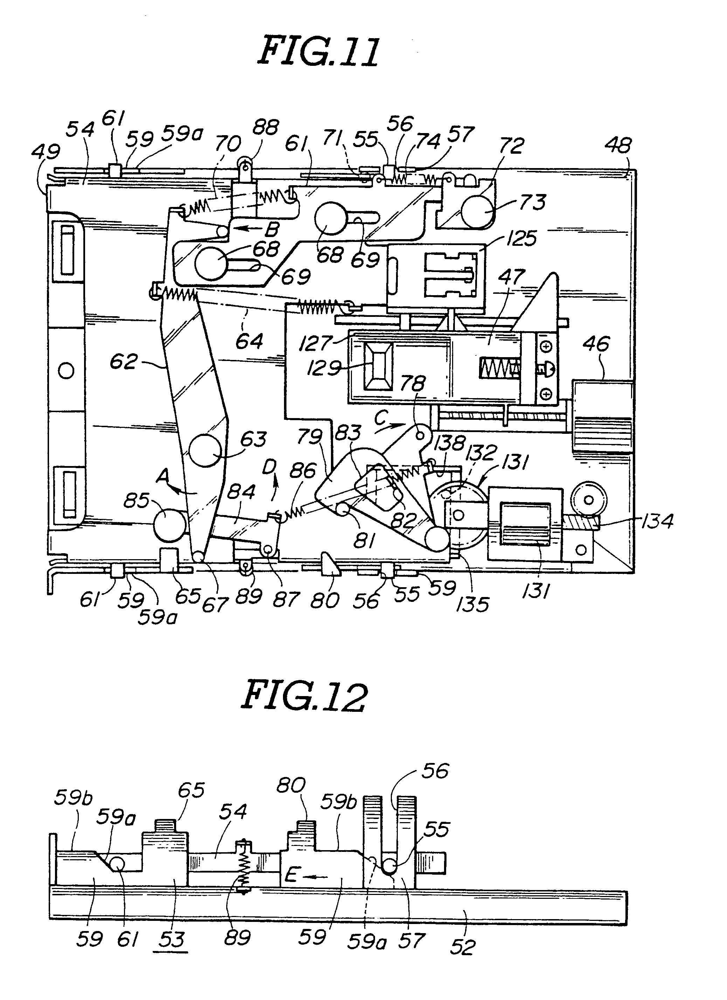

The operation of insertion and removal of the disc cassette 31 will now be described. When a disc cassette 31 is inserted into the cassette holder 54 through a disc cassette insertion and removal opening 141 with the apparatus in the condition shown in Figure 5, the hook pin 71 at the foremost part of the hook lever 72 snaps into the mating recess 41 for holding the disc cassette 31 in the cassette holder 54. At this time, the engaging end pin 78 of the shutter arm 76 snaps into the associated recess 31a of the cassette 31 adjacent the shutter 39 to open the shutter 39. Upon further insertion of the disc cassette into the cassette holder 54, the shutter arm 76 is turned in the direction opposite to arrow C of Figure 5 against the force of the tension spring 86 so that the lock arm 79 is turned in the same direction. When the lock arm 79 is turned in this manner, the lock pin 81 is disengaged from the second locking pawl 80. The driving arm 62 biased to rotate by the first tension spring 64 is turned in the direction of arrow A of Figure 5. Since the guide rollers 55 are engaged in the slide guide slots 56 perpendicular to the chassis 48, the cassette holder 54 is not slid horizontally relative to the surface of the chassis 48, but acts for shifting the loading plate 53 carrying the cassette holder 54 in the direction of arrow E of Figure 12 while shifting the loading lever 67 in the direction opposite to the direction indicated by arrow B of Figure 5 to retract the disc cassette 31 into the cassette holder 54, the shutter arm 76 being also turned as shown in Figure 11 for opening the shutter 39. As the loading plate 53 is moved, the cassette holder 54 biased by the compression springs 88,89 is lowered and pressed onto the chassis 48 (Figure 12), with the guide rollers 55,61 rolling on the inclined cam surfaces 59a of the cam plate sections 59 provided on the loading plate 53. With the cassette holder 54 thus lowered and pressed against the chassis 48, sensor elements 123a,124a of cassette mounting sensor switches 123,124 provided on the upper main surface of the printed circuit board 106 mounted at the lower surface of the chassis 48 as described above are depressed to indicate loading of the cassette 31. Simultaneously, the disc cassette 31 is positioned and mounted on the chassis 48 with the foremost positioning portions 91a,91a of the positioning pins 91,91 engaging in the mating apertures 40,40 of the disc cassette 31 and with the foremost part of the abutment positioning pins 92,92 abutting the planar surface of the disc cassette 31. The centre core 34 of the disc 33 at this time is similarly placed on the turntable 118 under attraction by the magnet 121 with the spindle 95 introduced into the centre aperture 34.

When the cassette holder 54 is lowered, an upper head supporting arm 127 of the head unit 47 which has its operating member 126 engaged with a head arm operating section 125 mounted to one rear side of the cassette holder 54, is turned under the force of an urging spring 128 so that the arm 127 is lowered towards the chassis 48 along with the cassette holder 54. A magnetic head 129 attached to the foremost part of the upper head supporting arm 127 and a magnetic head 129a similar in construction to the supporting arm 127 are disposed on both sides of and in sliding contact with the magnetic disc 33.

Upon actuation of the electric motor 94, the turntable 118 and hence the magnetic disc 33 are set into rotation. At this time, since the magnetic disc 33 is loaded by the magnetic heads 129,129a in sliding contact therewith, it is subjected to a force acting opposite to the rotational direction of the turntable 118 so that the disc is caused to rotate at a lower speed as it is entrained for rotation with the turntable 118. The resulting relative movement causes the driving pin 120 to be inserted into and engaged with the associated aperture 36 in the centre core 34 so that the disc 33 is positioned by the turntable 118 and chucked so that the centre core 34 is magnetically attracted to the magnet 121. With the disc 33 chucked in this manner, the magnetic disc 33 is driven in rotation so that information signals can be writen or readout by the magnetic heads 129,129a slidingly contacting the magnetic disc 33.

It will be noted that the head unit 47 comprising a pair of head supporting arms 127,127a carrying the magnetic heads 129,129a is also mounted on the chassis 48 having the built-in electric motor 94. Therefore, the head unit 47 slidingly contacting the magnetic disc 33 and the electric motor 94 rotationally driving the magnetic disc 33 are mounted on the same chassis 48 as a mounting reference. In this manner, the relative positions of the head unit 47 and the magnetic disc 33 chucked by the unit 93 provided on the spindle 95 of the electric motor 94 may be determined precisely.

After termination of the writing or reading of the information signals, the disc cassette 31 disposed within the system with the magnetic disc 33 chucked on the turntable 118 as described above can be ejected by stopping the motor 94 of the disc chucking unit 93 to halt the disc 33. An eject button, not shown, is then pressed to drive the loading electric motor 131. When the motor 131 is actuated, the offset driving pin 132 engaging in the mating recess 138 as shown in Figure 10 is turned in the direction of arrow X with an offset relative to the axis of the spur gear 136. The loading plate 53 is shifted in a direction shown by arrow Y and by a distance corresponding to the offset of the driving pin 132. When the loading plate 53 is shifted as shown in Figure 13, the guide rollers 55,61 of the cassette holder 54 ride on the inclined cam surfaces 59a of the cam sections 59 so as to be shifted onto the horizontal sections 59b to cause the elevation of the cassette holder 54 as shown in Figure 6. With the cassette holder 54 thus elevated above the cam sections 59, the cassette holder driving arm 62 has its foremost locking pin 66 locked by the first locking pawl 65 of the loading plate 54 so that it is turned in the direction opposite to arrow A of Figure 11 against the urging force of the first tension spring 64. When the driving arm 62 is turned in this manner, the loading lever 67 is shifted by the second tension spring 70 in the direction of arrow B of Figure 11 for pressing and ejecting the disc cassette 31 through the opening 141. At this time, the hook lever 72 is turned slightly outwardly of the cassette holder 54 to release the disc cassette 31 from the hook pin 71. The shutter arm 76 and the locking arm 79 are turned by the fourth tension spring 86 to cause the lock pin 81 to engage with the second locking pawl 80. Thus the ejection state shown in Figures 5 and 6 is reached.

During the ejection, the offset driving pin 132 is turned after the loading plate 53 is shifted to the position shown in Figure 13 and until the sensor switch 139 is actuated by the operating part 141 of the spur gear 136. The driving pin 132 is halted at the position shown in Figure 10 and engaged with the mating recess 138 when the loading plate 53 has been shifted to the loading position of the disc cassette 31.

Disc cassette ejection may also be performed manually. Since the offset driving pin 132 is engaged with the recess 138 only when the loading plate 53 is at the loading position, the loading plate 53 can be directly pressed for shifting the loading plate 53 in the direction of arrow Y in Figure 10 for disc cassette ejection provided that the offset driving pin 132 is not turned but caused to remain at the position shown in Figure 10.

**Claims**

1. Recording and/or reproducing apparatus for recording and/or reproducing information signals onto or from a magnetic disc (33) enclosed in a disc cassette (31), the apparatus comprising a chassis (48);

a recording and/or reproducing head (47) movably attached to the chassis (48);

a cassette holder (54) mounted on the chassis (48) so as to be movable between a cassette inserting position and a cassette operating position; and means for rotating the disc (33) when the cassette holder (54) is in the cassette operating position; said means comprising:-

a spindle (95) rotatably mounted in the chassis (48) by bearing means (100,101);

chucking means (93) provided on the upper side of the spindle (95) to couple the disc (33) with the spindle (95);

a rotor magnet (96) fixed to the spindle (95), disposed beneath the chassis (48) and to be rotated to rotate the spindle (95);

a circuit base board (106) fixed to the chassis (48) and disposed beneath the rotor magnet (96); and

a stator coil (105) mounted on the circuit base board (106) and juxtaposed with the rotor magnet (96);

characterised by

a supporting plate (116) of magnetizable material affixed to the chassis (48) beneath the rotor magnet (96), and supporting the circuit base board (106), the magnetic force between the rotor magnet (96) and the supporting plate (116) being exerted on the spindle (95) downwardly to suppress vertical wobbling of bearing means (100,101) with respect to the chassis (48).

2. Recording and/or reproducing apparatus according to claim 1, comprising:

positioning pins (91,92) penetrating the chassis (48);

cassette positioning portions (91a,92a) provided on the top of the positioning pins (91,92) to position the disc cassette (31) when the cassette holder (54) is in the cassette operating position; and

circuit base board positioning portions (91b,92b) provided beneath the positioning pins (91,92) to position the circuit base board (106) so as to face the rotor magnet (96) and the stator coil (105).

3. Recording and/or reproducing apparatus according to claim 1, wherein the bearing means (100,101) are press-fitted into the chassis.

**Revendications**

1. Appareil d'enregistrement et/ou de reproduction destiné à enregistrer et/ou reproduire des signaux d'information sur ou depuis un disque magnétique (33) enfermé dans une cassette de disque (31), l'appareil comportant

un châssis (48);

une tête d'enregistrement et/ou de reproduction (47) fixée de façon mobile au châssis (48);

un porte-cassette (54) monté sur le châssis (48) de façon à être mobile entre une position d'insertion de cassette et une position de fonctionnement de la cassette; et des moyens destinés à entraîner en rotation le disque (33) lorsque le porte-cassette (54) est dans la position de fonctionnement de la cassette;

les dits moyens comportant :

un axe (95) monté de façon rotative dans le châssis (48) à l'aide de moyens de palier (100, 101);

des moyens de serrage (93) prévus sur le côté supérieur de l'axe (95) afin de coupler le disque (33) à l'axe (95);

un aimant de rotor (96) fixé à l'axe (95), disposé sous le châssis (48) et devant être entraîné en rotation afin de faire tourner l'axe (95);

une plaque de base de circuit (106) fixée au châssis (48) et disposée sous l'aimant de rotor (96); et

un bobinage de stator (105) monté sur la plaque de base de circuit (106) et juxtaposé à l'aimant de rotor (96);

caractérisé par une plaque de support (116) en matériau magnétisable fixée au châssis (48) sous l'aimant de rotor (96) et supportant la plaque de base de circuit (106), la force magnétique entre l'aimant de rotor (96) et la plaque de support (116) étant exercée sur l'axe (95) vers le bas afin de supprimer le battement vertical des moyens de palier (100, 101) par rapport au châssis (48).

2. Appareil d'enregistrement et/ou de reproduction selon la revendication 1, comprenant :

des broches de positionnement (91, 92) pénétrant dans le châssis (48);

des parties de positionnement de cassette (91a, 92a) prévues sur le dessus des broches de positionnement (91, 92) afin de positionner la cassette de disque (31) lorsque le porte-cassette (54) est dans la position de fonctionnement de cassette; et

des parties de positionnement de plaque de base de circuit (91b, 92b) prévues sous les broches de positionnement (91, 92) afin de positionner la plaque de base de circuit (106) de façon à faire face à l'aimant de rotor (96) et au bobinage de stator (105).

3. Appareil d'enregistrement et/ou de reproduction selon la revendication 1, dans lequel les moyens de palier (100, 101) sont emmanchés à la presse dans le châssis.

## Ansprüche

1. Aufzeichnungs- und/oder Wiedergabegerät zum Aufzeichnen und/oder Wiedergeben von Informationssignalen auf oder von einer in einer Plattenkassette (31) eingeschlossenen Magnetplatte (33), mit

einem Rahmen (48),

einem Aufzeichnungs- und/oder Wiedergabekopf (47), der bewegbar am Rahmen (48) angebracht ist,

einem Kassettenhalter (54), der am Rahmen (48) so angebracht ist, daß er zwischen einer Kassetteneinführposition und einer Kassettenbetriebsposition bewegbar ist, und

einer Einrichtung zum Drehen der Platte (33), wenn sich der Kassettenhalter (54) in der Kassettenbetriebsposition befindet, wobei diese Einrichtung umfaßt:

eine Achse (95), die mittels einer Lageranordnung (100,101) drehbar im Rahmen (48) montiert ist,

eine im oberen Bereich der Achse (95) vorgesehene Spannanordnung (93) zum Kuppeln der Platte (33) mit der Achse (95),

einen an der Achse (95) befestigten Rotormagneten (96), der unterhalb des Rahmens (48) angeordnet und zwecks Drehung der Achse (95) zu drehen ist,

eine Schaltungsträgerplatte (106), die am Rahmen (48) befestigt und unterhalb des Rotormagneten (96) angeordnet ist, und

eine Statorwicklung (105), die an der Schaltungsträgerplatte (106) befestigt und neben dem Rotormagneten (96) angeordnet ist,

**gekennzeichnet** durch

eine Stützplatte (116) aus magnetisierbarem Material, die unterhalb des Rotormagneten (96) am Rahmen (48) befestigt ist und die Schaltungsträgerplatte (106) abstützt, wobei die Magnetkraft zwischen dem Rotormagneten (96) und der Stützplatte (116) auf die Achse (95) in Richtung nach unten ausgeübt wird, um vertikales Wobbeln der Lageranordnung (100,101) bezüglich des Rahmens (48) zu unterdrücken.

2. Aufzeichnungs- und/oder Wiedergabegerät nach Anspruch 1, mit Positionierstiften (91,92), die in den Rahmen (48) eindringen,

Kassetten-Positionierabschnitten (91a ,92b), die an der Oberseite der Positionierstifte (91,92) vorgesehen sind, um die Plattenkassette (31) zu positionieren, wenn sich der Kassettenhalter (54) in der Kassettenbetriebsposition befindet, und

Schaltungsträgerplatten-Positionierabschnitten (91b,92b), die unterhalb der Positionierstifte (91,92) vorgesehen sind, um die Schaltungsträgerplatte (106) so zu positionieren, daß sie dem Rotormagneten (96) und der Statorwicklung (105) gegenüberliegt.

3. Aufzeichnungs- und/oder Wiedergabegerät nach Anspruch 1, in welchem die Lageranordnung (100,101) mit Preßpassung in den Rahmen eingesetzt ist.

FIG. 1

EP 0 187 546 B1

# FIG.2

# FIG.3

# FIG.4

## FIG.5

## FIG.6

# FIG.7

EP 0 187 546 B1

## FIG.8

## FIG.9

## FIG.10

## FIG.13

# FIG.11

# FIG.12